# FASCICULE DE BREVET EUROPEEN

(11) **EP 1 090 795 B1**
(45) Date de publication et mention de la délivrance du brevet: **01.09.2004**
(21) Numéro de dépôt: 00402723.1
(22) Date de dépôt: 04.10.2000
(51) Int. Cl.: B60K 15/03, B60K 15/04, B60K 15/077

(54) **Réservoir pour véhicule utilisant un carburant constitué par du gaz de pétrole liquéfié**
Fahrzeugtank für Flüssiggas
Vehicle tank for liquified gas

(30) Priorité: 07.10.1999 FR 9912476
(43) Date de publication de la demande: 11.04.2001
(73) Titulaire: GIAT INDUSTRIES, 78000 Versailles (FR)
(72) Inventeur: Maquaire, Michel, 45160 Ardon (FR)
(74) Mandataire: Célanie, Christian

(56) Documents cités:
- EP-A- 0 779 468
- WO-A-97/27105
- WO-A-98/20247
- DE-A- 2 165 880
- GB-A- 2 089 014
- US-A- 4 688 587
- US-A- 5 893 385

## Description

Le secteur technique de la présente invention est celui des réservoirs de carburant pour véhicule fonctionnant avec un carburant constitué par du gaz de pétrole liquéfié (GPL) ou tout autre type de carburant liquide actuel ou futur.

On sait que les réservoirs destinés à contenir ce type de carburant contiennent une phase liquide et une phase gazeuse nécessitant des moyens de contrôle du remplissage, du surremplissage éventuel, de la pression de gaz et de l'autonomie conférée au véhicule. On a donc d'abord réalisé des réservoirs GPL suffisamment résistants, en jouant sur l'épaisseur des parois, que l'on remplissait en contrôlant sommairement le volume introduit. Ce type de réservoir n'offrait aucune fiabilité tant au niveau de la quantité de carburant introduite que celui de la sécurité en cas de surpression.

A titre documentaire, on peut se reporter aux brevets DE-OS-2165880 et GB-A-2089014 qui décrivent des réservoirs réalisés sous la forme de bonbonnes de gaz domestiques.

On a tenté d'améliorer ces réservoirs en prévoyant des valves de sécurité permettant de libérer une quantité de gaz dès qu'un niveau critique de pression était atteint. Mais ces systèmes de valve n'assurent pas toujours leur fonction de sécurité en cas de surpression brutale par suite d'un échauffement local du réservoir ou d'un incendie du véhicule. Quant au problème du jaugeage et par suite celui de l'autonomie du véhicule, on n'a jamais pu apporter une solution satisfaisante aux utilisateurs malgré les avantages indéniables de ce type de carburant.

On a également proposé dans le brevet WO-97/27105 des réservoirs GPL présentant une forme analogue à celle des réservoirs classiques à essence. Le réservoir décrit est en composite et nécessite l'incorporation d'une matrice interne constituée de plaques entrelacées pour obtenir une résistance mécanique conforme aux normes, matrice qui est liée aux parois du réservoir.

Les travaux entrepris dans le cadre de l'invention visent à améliorer la résistance mécanique des réservoirs qu'ils soient métalliques ou en composites. Aucune étude pratique d'ensemble de la fonction n'a été réalisée afin de considérer ce type de réservoir en vue de son intégration dans un véhicule. C'est donc le mérite du demandeur d'avoir pris en compte l'ensemble de la fonction permettant l'alimentation du dispositif de transformation énergétique (moteur) d'un véhicule à l'aide de ce type de carburant (GPL).

Le système connu par WO-A-9820247 correspond au préambule de la revendication 1.

Le but de la présente invention vise à reconsidérer l'ensemble de la fonction stockage carburant lorsqu'un véhicule est équipé d'un réservoir contenant un carburant liquide sous faible pression (GPL) de façon à améliorer non seulement la sûreté de fonctionnement de ce réservoir, mais encore à faciliter la détection de tout dysfonctionnement, les contrôles périodiques et les remises en état nécessaires.

C'est pourquoi l'invention concerne un système de gestion et de contrôle de l'état d'un réservoir destiné à contenir un carburant liquide sous forme d'un gaz liquide sous pression (GPL) pour véhicule selon la revendication 1.

Avantageusement, le moyen de remplissage principal est équipé d'un dispositif de sécurité émettant des vibrations spécifiques et différenciées au cours de son fonctionnement.

Le système selon l'invention peut comprendre un moyen de coupure du dispositif de remplissage agissant en l'absence de détection d'un seuil de la vibration spécifique après un certain délai de remplissage.

Selon une autre variante, le moyer de coupure secondaire du module de remplissage est actionné par la défaillance du moyen principal de remplissage.

Le module de sécurité comprend une soupape de sécurité incluant un moyen de détarage permettant l'évacuation de gaz en cas de surpression brutale ou d'incendie.

Selon encore une variante de réalisation, le module électronique de contrôle comprend :
- un moyen d'intégration A de l'environnement du véhicule, tel l'inclinaison, la température,
- un moyen de traitement B du signal du module de jaugeage en relation avec un moyen de correction de l'information,
- un moyen de commande C des électrovannes,
- un moyen de commande D du moyen de pompage,
- un moyen de mesure E de la pression dans le circuit d'alimentation du véhicule,
- un moyen de régulation F de la pression dans le circuit d'alimentation du véhicule,
- et un moyen de commande G du détarage de la soupape du module de sécurité.

Avantageusement, le moyen d'intégration A comporte des moyens de correction reliés au module de jaugeage pour en corriger la valeur fournie en fonction de la cartographie du réservoir.

Le module électronique de contrôle est fixé soit au réservoir, soit localisé dans un endroit spécifique du véhicule permettant d'intégrer au mieux les différents capteurs nécessaires.

Un tout premier avantage du système selon l'invention réside dans le fait que tout mauvais fonctionnement est détecté et l'utilisateur en est informé.

Un autre avantage de l'invention réside dans l'adoption d'une modularité des fonctions à remplir pour assurer la bonne utilisation du réservoir, ce qui en facilite l'intégration dans ces mêmes réservoirs quelle que soit leur forme.

Un autre avantage de l'invention réside dans le fait que le remplacement d'éléments endommagés est facilité.

D'autres caractéristiques, détails et avantages de l'invention ressortiront plus clairement de la description donnée ci-après à titre indicatif en relation avec des dessins dans lesquels :
- la figure 1 représente une vue générale du réservoir équipé de ses principaux éléments,
- les figures 2A et 2B représentent des exemples de réalisation du module de remplissage,
- les figures 3A et 3B représentent in exemple de réalisation du module de jaugeage,
- la figure 4 représente un exemple de réalisation du module de puisage,
- la figure 5 représente un exemple de réalisation d'une valve de sécurité et la figure 6 un schéma d'organisation du module électronique.

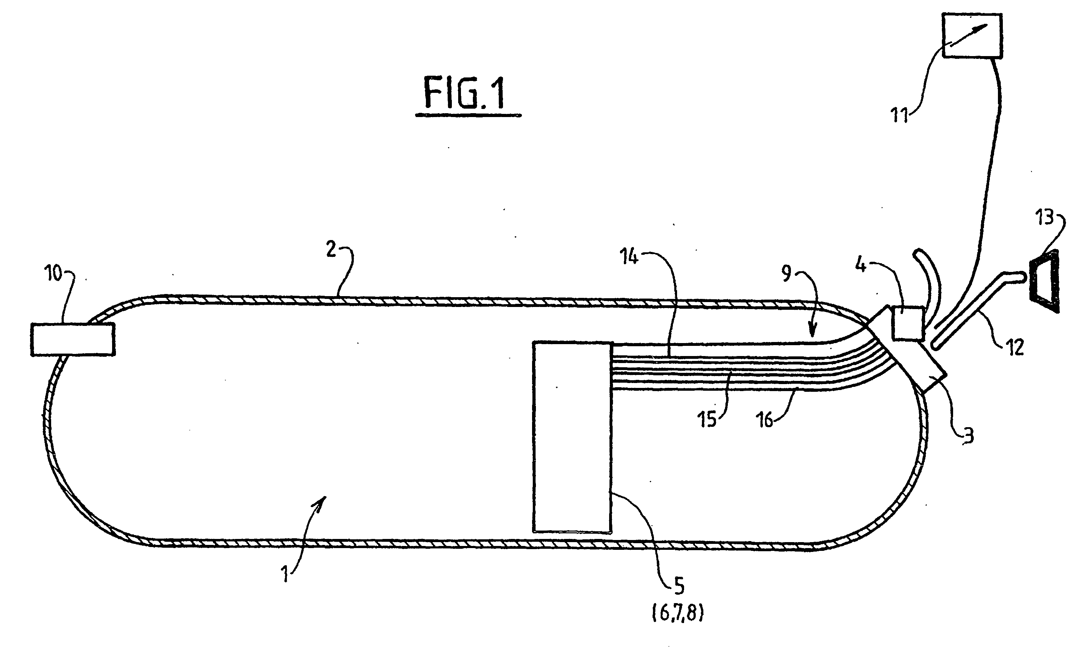

Comme il ressort de ce qui précède, les différentes fonctions du système de gestion et de contrôle du stockage de carburant sont organisées en modules individuels que l'on peut isoler l'un de l'autre. Ainsi, la figure 1 est une représentation schématique d'un réservoir 1 délimitant une enceinte 2 munie d'une plaque 3 d'interconnexion, d'un module électronique 4, d'un ensemble 5 regroupant un module de remplissage 6, de jaugeage 7 et de puisage 8, reliés par une gaine 9 à la plaque 3, et d'un module de sécurité 10. Le module électronique 4 est destiné à recevoir les informations venant des modules 6, 7 et 8 puis, après traitement, les diriger soit vers un afficheur 11, soit vers un autre module afin de commander une fonction particulière. Bien entendu, la plaque 3 est équipée pour recevoir un collecteur 12 relié au connecteur de remplissage externe 13 du réservoir. La gaine 9 renferme un certain nombre de câbles de liaison 14, 15 et 16 reliant les modules 6, 7 et 8 à la plaque 3.

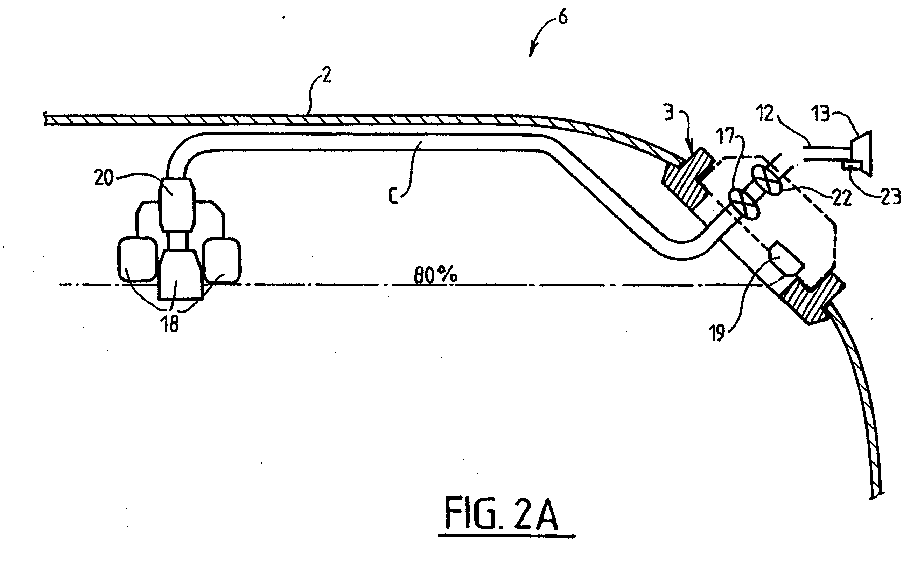

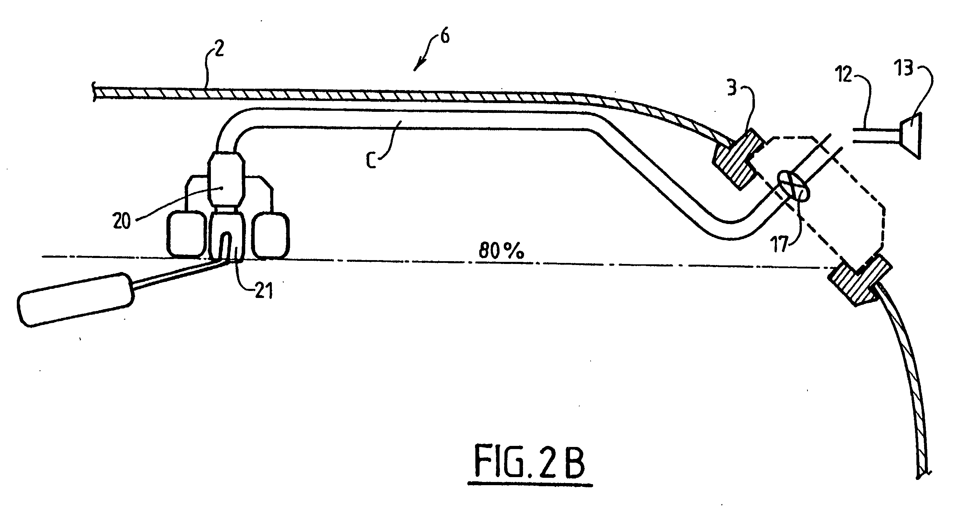

Si l'on considère le module de remplissage 6 représenté sur les figures 2A et 2B dans une configuration avantageuse, une conduite C de remplissage est aménagée entre le collecteur 12 et un système principal de coupure 18. Ce module est doté en complément des clapets classiques anti-retour 17 et/ou d'un dispositif manuel d'isolement, d'une part d'un dispositif de sécurité 18 émettant des vibrations spécifiques (par exemple des sons) lors de sa mise en action permettant d'en contrôler le fonctionnement par un capteur 19 et d'autre part d'un système secondaire 20 de coupure de remplissage couplé au système principal 21 de coupure, ici du type mécanique à flotteur (éventuellement à clapet...). Le système secondaire 20 est réglé de manière à ce qu'il ne soit actionné qu'en cas de défaillance du système de coupure principal 21 relié à une électrovanne 22 et permettant donc de détecter et d'informer l'utilisateur de la défaillance du système primaire de contrôle de remplissage qui commande cette électrovanne.

Avec le module ainsi conçu, l'utilisateur détecte une anomalie éventuelle :
- par l'absence de détection par le capteur 19 de la vibration spécifique en simultanée (ou en décalé de quelques secondes) avec le signal de présence du connecteur de remplissage 13 issu du détecteur 23 et on élimine ainsi les risques de fuites externes,
- par le maintien de la présence de la vibration spécifique ou du bruit ou d'une signalisation alors que le signal de coupure de l'électrovanne 22 a été donné et on élimine ainsi les risques d'un surremplissage dangereux par la mise en action d'une alerte et du système secondaire de coupure du remplissage 20, éventuellement réversible ou de tout autre dispositif de coupure.

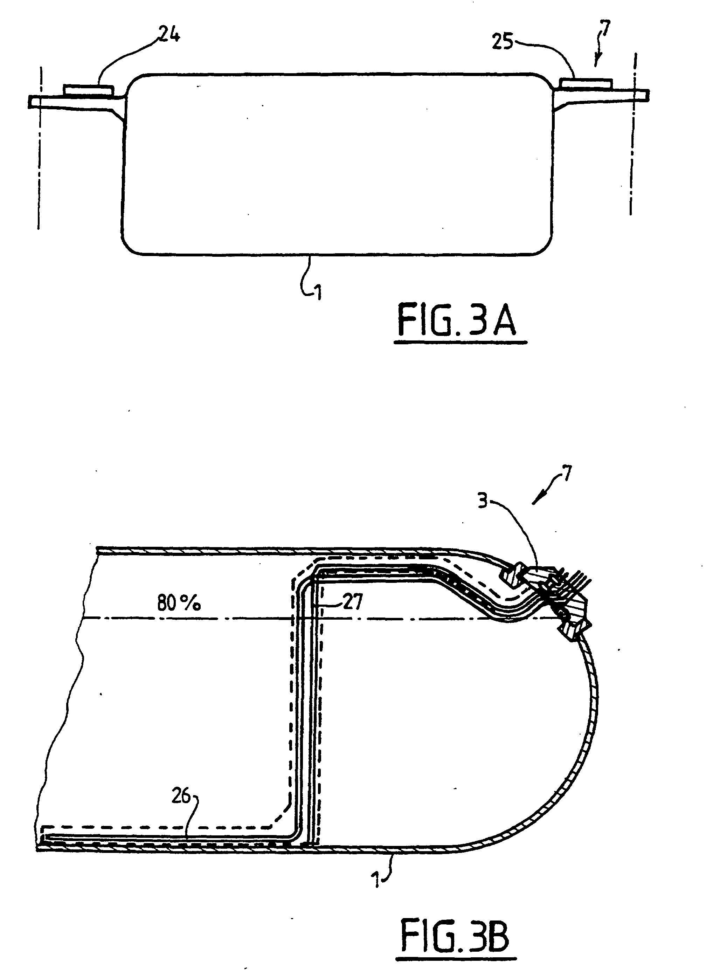

Sur la figure 3A, on a représenté le module de jaugeage 7 constitué d'un certain nombre de capteurs 24, 25 placés entre le réservoir 2 et le châssis du véhicule. Ces capteurs sont par exemple des jauges de contrainte qui par déformation délivrent un signal électrique qui est envoyé au module électronique 4. Sur la figure 3B, on a représenté les moyens permettant de transmettre au conducteur le niveau de remplissage constitué d'un premier ensemble de fibres optiques 26, dit de référence, dont la partie sensible est constamment immergée dans le carburant et d'un second ensemble 27, dit de mesure, dont la partie sensible est immergée proportionnellement au niveau du carburant liquide. La comparaison des valeurs fournies par ces deux ensembles permet de connaître le niveau de remplissage.

La fonction générale de ce module de jaugeage 7 est :
- de mesurer le niveau de liquide ou la masse de carburant embarqué à tout moment (remplissage si requis, en utilisation),
- de piloter, si requis et après traitement par le module électronique 4, le dispositif de coupure 20 intégré au module de remplissage 6 et présent dans la version principale du système proposé dans la plaque d'interconnexion 3,
- de transmettre, après traitement par le module électronique 4 si requis, les données nécessaires à l'indication au conducteur du véhicule du niveau de remplissage et donc de son autonomie en carburant.

Ce module selon la complexité dudit réservoir peut être :
- soit dupliqué en différents points du réservoir 1 de façon à pouvoir en déduire un niveau moyen ou une masse embarquée,
- soit être lié à un calculateur (non représenté) capable en fonction d'une cartographie du réservoir et de son inclinaison selon au moins deux axes mesurée par un capteur spécifique, de déduire le volume ou la masse de carburant embarqué.

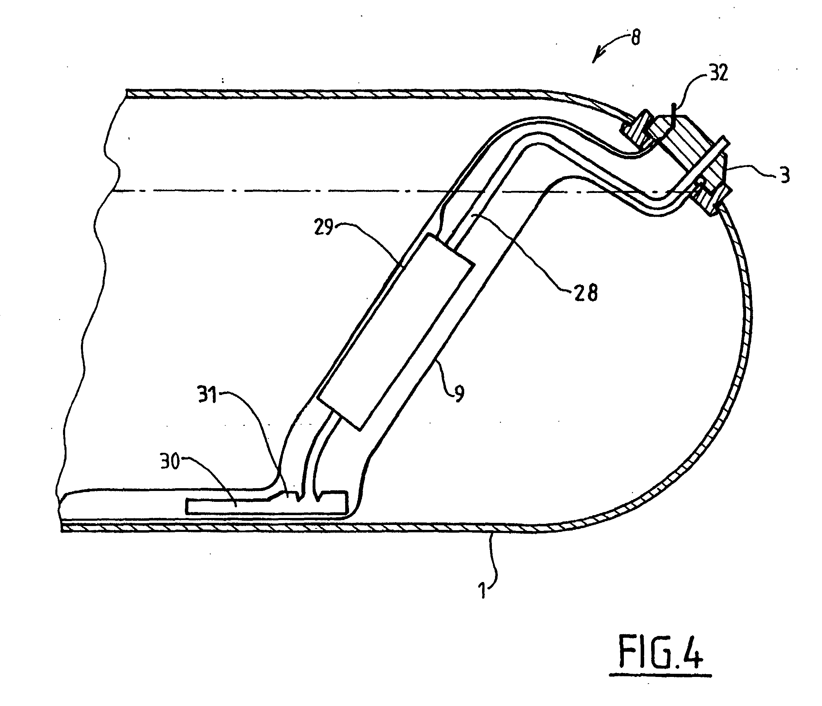

Le module de puisage 8 représenté sur la figure 4, pouvant être regroupé dans la version principale au module de remplissage 6 et de jaugeage 7, intègre la tubulure de puisage 28 et le cas échéant une pompe 29 permettant de maintenir une pression minimale ou une surpression de quelques bars à quelques dizaines de bars dans le système de distribution (ou circuit carburant) en tant que de besoin. Il comprend aussi un dispositif de préfiltration 30 pouvant être placé, de par sa forme, au point le plus bas dudit réservoir 1 sans pour autant être susceptible de s'obstruer facilement et un dispositif antidéjaugeage 31 permettant l'utilisation du réservoir en autonomie minimale.

La plaque d'interconnexion 3 porte, dans la version principale, toutes les connexions permettant la continuité des dispositifs de remplissage, de puisage, de jaugeage, et, le cas échéant, de sécurité (pression/température) entre l'enveloppe sous pression et l'extérieur.

Elle porte, si cela s'avère nécessaire ou adapté, les dispositifs de contrôle de ces dispositifs (vannes manuelles ou commandées, clapets anti-retour, by-pass...) et peut abriter aussi le boîtier électronique de contrôle. Elle comporte aussi, si nécessaire, un dispositif de filtration permettant un changement régulier du filtre.

La gaine 9 est utilisée dans le cas ou les modules de remplissage, de jaugeage et de puisage ne peuvent être directement groupés et/ou reliés à la plaque d'interconnexion.

Elle contient un dispositif de liaison 32 permettant le contrôle du jaugeage et de la pompe immergée 29, ainsi que les conduits de remplissage C et de puisage dont le contrôle de bon fonctionnement est réalisé respectivement par le dispositif cité précédemment (émission d'une vibration ou d'un son par l'embout final de remplissage) et par le dispositif du boîtier électronique de contrôle (dispositif de mesure de la pression d'alimentation).

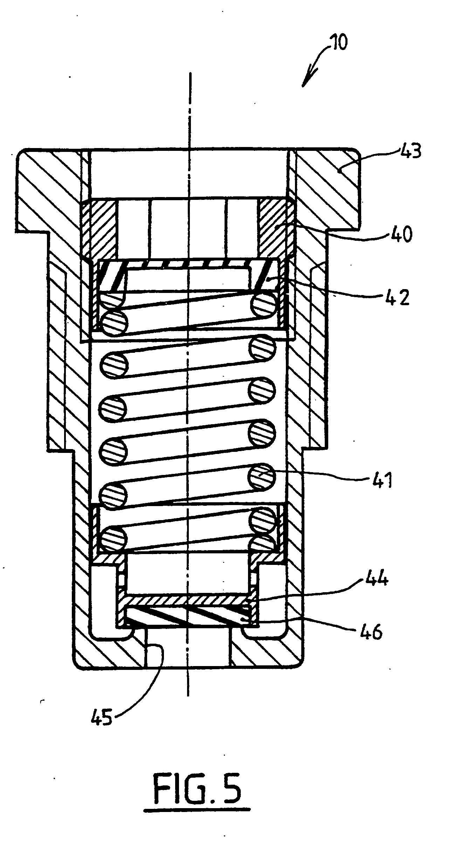

Le module 10 représenté en coupe sur la figure 5 permet de garantir qu'en cas de surpression interne un dispositif adapté permettra au gaz de s'échapper lorsque la pression dépasse un seuil donné (27.10⁵ Pa à ce jour pour le GPL) selon un débit suffisant pour éviter en cas de température externe très élevée (incendie du véhicule) l'emballement de cette montée en pression.

Une version évoluée de ces modules comportera un ou plusieurs dispositifs complémentaires permettant de détarer la mise en fonctionnement du dispositif en cas d'incendie brutal.

Ce dispositif complémentaire peut être par exemple constitué soit par un support d'appui 40 d'un ressort principal 41 d'une soupape réalisée dans un matériau fusible à la température souhaitée soit dans une autre version (non représentée) par un ressort complémentaire agissant en sens opposé au ressort principal réalisé dans un matériau dit à mémoire de forme et n'agissant donc que lors de l'atteinte d'une température souhaitée. Cette soupape est intégrée dans un corps 42 fixé au réservoir et le ressort 41 maintient un clapet 44 en appui sur un embout 45 par l'intermédiaire d'un joint 46. Le détarage du ressort 41 provoqué par la fusion de la membrane 42 sous l'effet de l'élévation de la température en cas d'incendie.

Ce module est principalement installé dans une zone du réservoir permettant l'évacuation exclusive du ciel gazeux (et non du liquide) et est éventuellement complété par un dispositif permettant de remplir cette condition même en cas de retournement du véhicule.

Une variante d'installation consiste à installer un premier dispositif dans une position telle que décrite ci-dessus et un deuxième dispositif dans une zone opposée permettant ce même dégazage en cas de retournement du véhicule ou de basculement sur le côté.

Dans tous ces cas, chacun de ces dispositifs est complété par un composant permettant d'obturer l'orifice d'évacuation en cas de présence de liquide.

Plus généralement, ces dispositifs sont dotés d'une membrane dont l'ouverture est calibrée au seuil le plus bas choisi pour la soupape et dont la présence est contrôlée par un dispositif intégré au module électronique ou facilement identifiable lors des contrôles réguliers des véhicules.

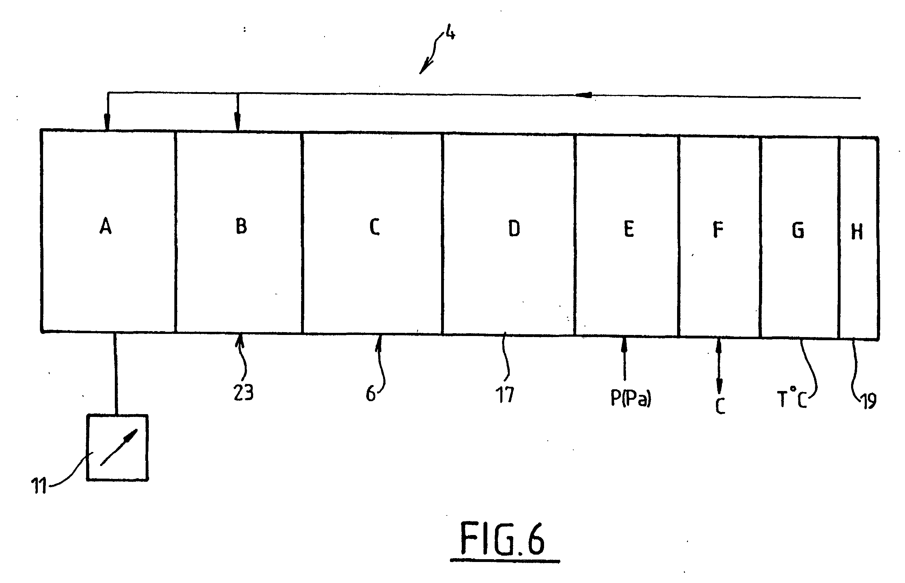

Comme représenté sur la figure 6, le module électronique 4 est doté :
- d'un sous module A permettant à partir d'un dispositif intégré mesurant l'inclinaison selon deux axes, par rapport à un plan horizontal du véhicule, de corriger à tout moment la valeur relevée par le module de jaugeage en fonction de la cartographie du réservoir et donc :
   d'afficher l'autonomie réelle quelle que soit la position du véhicule,
   de couper le remplissage du réservoir à la valeur souhaitée quelle que soit la position du véhicule,
   de déclencher un système d'alarme si le niveau maximum a été dépassé ou si lors du remplissage, le bruit émis par le dispositif de remplissage n'a pas été capté,
- d'un sous module B permettant de détecter le mode d'utilisation du réservoir et de se mettre en mode remplissage (signal de présence du connecteur par capteur 23), en mode alimentation avec pompe et régulation de pression ou sans pompe ou en arrêt,
- d'un dispositif électronique C permettant de traiter le signal du système de jaugeage et d'alimenter les sous modules ci-dessus,
- d'une électronique de commande D permettant dans tous les cas d'actionner l'électrovanne d'alimentation et, si requis, l'électrovanne du circuit de remplissage en fonction des informations fournies par les sous modules A ou B,
- d'un dispositif de mesure E de la pression d'alimentation,
- d'une électronique de commande F pilotant un by-pass dans le circuit d'alimentation permettant dans le cas de l'utilisation de la pompe immergée, de réguler finement la pression du circuit d'alimentation,
- d'un dispositif G mesurant la température interne du liquide stocké dans le réservoir et la température externe permettant d'alimenter les sous modules A ou B dans le but d'affiner les mesures d'autonomie ou de déclencher le cas échéant le détarage de la soupape de sécurité (incendie),
- d'un dispositif H permettant de détecter les vibrations spécifiques émises par le module de remplissage.

## Revendications

1. Système de gestion et de contrôle de l'état d'un réservoir (1) destiné à contenir un carburant liquide sous forme d'un gaz liquide sous pression (GPL) pour véhicule comprenant une enceinte (2) munie
- d'un module interne de remplissage (6) intégrant un moyen de remplissage doté d'un moyen de coupure principal (21) de remplissage,
- d'un module interne de puisage (8) intégrant un moyen de pompage (29), un moyen évitant le déjaugeage (31), ledit module interne de puisage (8) étant apte à maintenir le niveau de pression requis dans le circuit d'alimentation en carburant du moteur du véhicule,
- d'au moins un module de sécurité (10) apte à éliminer une surpression dans le réservoir (1),
- d'au moins un module (3) d'interface et de connexion destiné à intégrer les modules précités entre eux et à assurer l'interface entre l'intérieur et l'extérieur du réservoir (1) sous pression, et d'un module électronique (4) extérieur de contrôle et de pilotage des différents modules
**caractérisé en ce que** le moyen de remplissage est doté d'un moyen secondaire (20) de coupure du
remplissage, au moins les moyens de coupure principale (21) étant du type à clapet ou à flotteur à action mécanique directe, **en ce que** le module interne de puisage (8) comporte un premier moyen (30) de filtration, et **en ce que** le système comprend un module interne ou externe de jaugeage (7) destiné à mesurer le niveau de liquide ou la masse embarquée dans le réservoir (1) et à transmettre au conducteur du véhicule les informations relatives à l'autonomie dont il dispose.

2. Système de gestion et de contrôle de l'état d'un réservoir selon la revendication 1, **caractérisé en ce que** le module interne de remplissage (6) est équipé d'un dispositif de sécurité (18) émettant des vibrations spécifiques et différenciées au cours de son fonctionnement.

3. Système de gestion et de contrôle de l'état d'un réservoir selon la revendication 1 ou 2, **caractérisé en ce qu'**il comprend un moyen secondaire de coupure (22) de remplissage agissant en l'absence de détection d'un seuil de la vibration spécifique après un certain délai de remplissage.

4. Système de gestion et de contrôle de l'état d'un réservoir selon l'une des revendications 1 à 3, **caractérisé en ce que** le moyen secondaire (22) de coupure de remplissage est actionné par la défaillance du moyen principal (21) de coupure de remplissage.

5. Système de gestion et de contrôle de l'état d'un réservoir selon l'une quelconque des revendications 1 à 4, **caractérisé en ce que** le module de sécurité (10) comprend une soupape de sécurité incluant un moyen de détarage (42) permettant l'évacuation de gaz en cas de surpression brutale ou d'incendie.

6. Système de gestion et de contrôle de l'état d'un réservoir selon l'une quelconque des revendications 1 à 5, **caractérisé en ce que** le module électronique de contrôle (4) comprend :
- un moyen d'intégration A de l'environnement du véhicule tel l'inclinaison, la température,
- un moyen de traitement B du signal du module de jaugeage en relation avec un moyen de correction de l'information,
- un moyen de commande C des moyens de coupure d'alimentation,
- un moyen de commande D du moyen de pompage
- un moyen de mesure E de la pression dans le circuit d'alimentation du véhicule,
- un moyen de commande G du détarage de la soupape du module de sécurité.

7. Système de gestion et de contrôle de l'état d'un réservoir selon la revendication 6, **caractérisé en ce que** le moyen d'intégration A comporte des moyens de correction reliés au module de jaugeage (7) pour corriger la valeur fournie en fonction de la cartographie du réservoir.

8. Système de gestion et de contrôle de l'état d'un réservoir selon la revendication 6, **caractérisé en ce que** le module électronique (4) de contrôle est soit fixé au réservoir (1), soit déporté dans un endroit spécifique du véhicule permettant d'intégrer au mieux les différents capteurs nécessaires.

## Patentansprüche

1. System zur Verwaltung und Steuerung des Zustandes eines eine Hülle (2) umfassenden Tanks (1), der dafür vorgesehen ist, einen flüssigen Kraftstoff in Form eines unter Druck stehenden Flüssiggases (LPG) für Fahrzeuge aufzunehmen, das ausgerüstet ist
- mit einem internen Modul zum Auffüllen (6), welches ein mit einem Haupt-Mittel (21) zum Unterbrechen des Auffüllens versehenen Mittel zum Auffüllen integriert,
- mit einem internen Schöpfmodul (8), welches ein Pumpen-Mittel (29) und ein Mittel zum Vermeiden der Falschmessung (31) umfasst, wobei das interne Schöpfmodul (8) dazu geeignet ist, das erforderliche Druckniveau im Kraftstoff-Versorgungssystem des Motors des Fahrzeuges zu halten,
- mit wenigstens einem Sicherheitsmodul (10), das dafür geeignet ist, einen Überdruck im Tank (1) abzubauen,
- mit wenigstens einem Übergangs- und Verbindungsmodul (3), das dafür vorgesehen ist, die vorgenannten Module untereinander zu integrieren und den Übergang zwischen dem Inneren und dem Äußeren des Tanks (1) zu gewährleisten,
- und mit einem äußeren Modul (4) zur elektronischen Überwachung und Steuerung der verschiedenen Module,
**dadurch gekennzeichnet, dass** das Mittel zum Auffüllen mit einem zweiten Mittel (20) zum Unterbrechen des Auffüllens versehen ist, wobei die Haupt-Mittel (21) zum Unterbrechen ein Sperrventil oder Schwimmer mit direkter mechanischer Einwirkung sind, dass das interne Schöpfmodul (8) ein erstes Filtermittel (30) umfasst, und in dass das System ein internes oder externes Messmodul (7) umfasst, das dafür vorgesehen ist, den Flüssigkeitsstand oder die in dem Tank (1) aufgenommene Masse zu messen und an den Fahrer des Fahrzeuges die Informationen bezüglich der ihm zur Verfügung stehenden Reichweite zu übermitteln.

2. System zur Verwaltung und Steuerung des Zustandes eines Tanks nach Anspruch 1, **dadurch gekennzeichnet, dass** das interne Modul (6) zum Auffüllen mit einer Sicherheitsvorrichtung (18) ausgerüstet ist, die spezifische und im Laufe ihres Betriebes unterschiedliche Vibrationen aussendet.

3. System zur Verwaltung und Steuerung des Zustandes eines Tanks nach Anspruch 1 oder 2, **dadurch gekennzeichnet, dass** es ein zweites Mittel (22) zum Unterbrechen des Auffüllens umfasst, welches bei Ausbleiben der Erfassung einer Schwelle der spezifischen Vibration nach einer bestimmten Auffüllzeit wirksam wird.

4. System zur Verwaltung und Steuerung des Zustandes eines Tanks nach einem der Ansprüche 1 bis 3, **dadurch gekennzeichnet, dass** das zweite Mittel (22) zum Unterbrechen des Auffüllens durch den Ausfall des Haupt-Mittels (21) zum Unterbrechen des Auffüllens betätigt wird.

5. System zur Verwaltung und Steuerung des Zustandes eines Tanks nach einem der Ansprüche 1 bis 4, **dadurch gekennzeichnet, dass** das Sicherheitsmodul (10) ein Sicherheitsventil umfasst, das ein Entlastungsmittel (42) enthält, welches das Entweichen von Gas im Falle abrupten Überdrucks oder Brandes ermöglicht.

6. System zur Verwaltung und Steuerung des Zustandes eines Tanks nach irgendeinem der Ansprüche 1 bis 5, **dadurch gekennzeichnet, dass** das elektronische Überwachungsmodul (4):
- ein Mittel A zur Integration der Umgebung des Fahrzeuges, wie die Neigung und die Temperatur,
- ein Mittel B zur Verarbeitung des Signals des Messmoduls in Verbindung mit einem Mittel zur Korrektur der Information,
- ein Mittel C zur Steuerung des Mittels zum Unterbrechen der Versorgung,
- ein Mittel D zur Steuerung des Pumpen-Mittels,
- ein Mittel E zum Messen des Drucks im Versorgungssystem des Fahrzeugs,
- ein Mittel G zur Steuerung der Entlastung des Ventils des Sicherheitsmoduls
umfasst.

7. System zur Verwaltung und Steuerung des Zustandes eines Tanks nach Anspruch 6, **dadurch gekennzeichnet, dass** das Integrationsmittel A Mittel zur Korrektur umfasst, die mit dem Messmodul (7) verbunden sind, um den in Abhängigkeit von der Konstruktionszeichnung des Tanks gelieferten Wert zu korrigieren.

8. System zur Verwaltung und Steuerung des Zustandes eines Tanks nach Anspruch 6, **dadurch gekennzeichnet dass** das elektronische Überwachungsmodul (4) entweder am Tank (1) befestigt ist oder an eine spezifische Stelle des Fahrzeugs verlagert ist, um es zu ermöglichen, die verschiedenen notwendigen Sensoren am besten zu integrieren.

## Claims

1. System to manage and monitor the state of a tank (1) intended to contain a liquid fuel in the form of a pressurised liquid gas (LPG) for a vehicle comprising a case (2) equipped with
- an internal filling module (6) integrating filling means having main shut-off means (21),
- an internal extraction module (8) integrating pumping means (29), means to avoid degauging (31), said internal extraction module (8) being able to maintain the pressure level required in the fuel supply circuit of the vehicle engine,
- at least one safety module (10) able to eliminate overpressure in the tank (1),
- at least one interface and connection module (3) intended to join the afore-mentioned modules and ensure an interface between the inside and outside of the pressurised tank (1),
- and an external electronic monitoring and piloting module (4) for the different modules,
wherein the filling means are provided with secondary shut-off means (20), at least the main shut-off means (21) being of the valve or ball cock type having direct mechanical action and wherein the internal extraction module (8) incorporates first filtration means (30) and in that the system (21) comprises an internal or external gauging module (7) intended to measure the level of liquid or the mass carried in the tank (1) and to transmit data related to the vehicle's autonomy to the driver.

2. System to manage and monitor the state of a tank according to Claim 1, wherein the internal filling module (6) is equipped with a safety device (18) emitting specific and graduated vibrations during its operation.

3. System to manage and monitor the state of a tank according to Claims 1 or 2, wherein it comprises secondary shut-off means (22) through the absence of detection of the specific vibration after a certain filling time.

4. System to manage and monitor the state of a tank according to one of Claims 1 to 3, wherein the secondary shut-off means (22) are activated by the failure of the main shut-off means (21).

5. System to manage and monitor the state of a tank according to any one of Claims 1 to 4, wherein the safety module (10) comprises a safety valve including derating means (42) allowing the gases to be evacuated in the event of any sudden overpressure or fire.

6. System to manage and monitor the state of a tank according to any one of Claims 1 to 5, wherein the electronic control module (4) comprises:
- means A to integrate the environment of the vehicle, such as tilt, temperature,
- means B to process the gauge module signal in relation with means to correct this data,
- means C to control the supply shut-off means,
- means D to control the pumping means,
- means E to measure the pressure in the vehicle's supply circuit,
- means G to de-rate the valve of the safety module.

7. System to manage and monitor the state of a tank according to Claim 6, wherein the integration means A incorporate correction means connected to the gauge means (7) to correct the value supplied according to the cartography of the tank.

8. System to manage and monitor the state of a tank according to Claim 6, wherein the electronic control module (4) is attached either to the tank (1), or placed in a specific area of the vehicle allowing the different sensors required to be best integrated.
